**Europäisches Patentamt**

**European Patent Office**

**Office européen des brevets**

(19)

(11) Veröffentlichungsnummer: **0 051 108**
**B1**

# EUROPÄISCHE PATENTSCHRIFT

(45) Veröffentlichungstag der Patentschrift:
**11.05.88**

(21) Anmeldenummer: **81105349.5**

(22) Anmeldetag: **09.07.81**

(51) Int. Cl.⁴: **B 29 D 22/00,** F 16 D 3/72,
B 29 C 67/18, B 29 C 33/52

(54) Verfahren zur Herstellung eines Kupplungselementes.

(30) Priorität: **31.10.80 DE 3041064**

(43) Veröffentlichungstag der Anmeldung:
**12.05.82 Patentblatt 82/19**

(45) Bekanntmachung des Hinweises auf die Patenterteilung:
**11.05.88 Patentblatt 88/19**

(84) Benannte Vertragsstaaten:
**AT FR GB IT SE**

(56) Entgegenhaltungen:
**DE - A - 2 710 275**
**DE - A - 2 927 955**
**GB - A - 2 015 923**
**US - A - 2 744 043**
**US - A - 3 074 111**

(73) Patentinhaber: **Messerschmitt-Bölkow-Blohm
Gesellschaft mit beschränkter Haftung,
Robert-Koch-Strasse, D-8012 Ottobrunn (DE)**

(72) Erfinder: **Brunsch, Klaus, Dipl.-Ing., Asternweg 11,
D-8190 Weidach (DE)**
Erfinder: **Herkert, Claus-Michael, Dipl.-Ing.,
Herzog-Albrecht-Strasse 67, D-8011 Zorneding (DE)**
Erfinder: **Thomamüller, Dieter, Blumenstrasse 11 1/2,
D-8206 Bruckmühl (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die bisher bekannt gewordenen Kupplungselemente, insbesondere die sogenannten Lamellenkupplungen oder Bendixkupplungen setzen sich
aus einer Vielzahl einzelner und einzeln bleibender Elemente zusammen, die ein beträchtlich
grosses Gewicht besitzen und daher erhöhte Anforderungen an die Aufnahmen, Verbindungselemente und Halterungen stellen. Alle diese bekannten Anordnungen sind ausserdem ohne
Nachbehandlung nicht korrosionsbeständig.

Durch das ältere nationale Recht DE-PS
2 927 955 der Anmelderin, (das keinen Stand der
Technik gemäss Artikel 54 EPÜ bildet), ist ein
Faserverbundkupplungselement beschrieben,
das jedoch beim Anbringen eines Flansches etc.
Fertigungsschwierigkeiten mit sich bringt.

Durch die DE-AS 2 710 275 ist ein Verfahren zur
Herstellung eines rohrförmigen Stangenkörpers
aus Fasern hoher Belastbarkeit bekannt geworden, die durch ein polymerisiertes synthetisches
Harz zusammengehalten werden. Die hier vorgeschlagenen Massnahmen erlauben jedoch nicht
die Herstellung einer Kupplungsscheibe aus einzelnen Faserzuschnitten.

Der vorliegenden Erfindung liegt die Aufgabe
zugrunde, ein wartungsfreies, gewichtsleichtes,
korrosionsbeständiges Kupplungselement zu
schaffen, das neben der Übertragung des Drehmomentes den Ausgleich von Winkel- und Axialversatz mitverbundener Torsionswellen erlaubt.

Diese Aufgabe wird durch die im Anspruch 1
angegebenen Massnahmen gelöst. In den Unteransprüchen sind Ausgestaltungen und Weiterbildungen aufgeführt und in der nachfolgenden Beschreibung ist ein Ausführungsbeispiel erläutert
und in den Figuren der Zeichnung detailliert skizziert. Es zeigen:

Fig. 1 einen Teilschnitt des fertigen Kupplungselementes mit den integrierten Anschlusselementen,

Fig. 2 einen Teilschnitt des Kupplungselementes gemäss Fig. 1 in der Draufsicht,

Fig. 3 einen schematischen Lagenschnitt der
zusammengesetzten Einzelelemente,

Fig. 4 eine Draufsicht, in welcher der Fertigungsablauf des Kupplungselementes bei aufgelegten innersten Lagen 3, $2_1$ und teilweise 1 entsprechend Fig. 3 gezeigt ist,

Fig. 5 eine Draufsicht auf das in Fig. 4 dargestellte Element nach kompletter Ablage der ersten
Schichten 3, $2_1$ und 1 mit den zweiten um 7°30'
versetzten Schichtelementen der Lage 1,

Fig. 6 eine Draufsicht auf ein Zuschnittelement
der Lage 1 und

Fig. 7 eine Tabelle der einzelnen Lagen, ihren
Stückzahlen und entsprechenden Faserorientierungen.

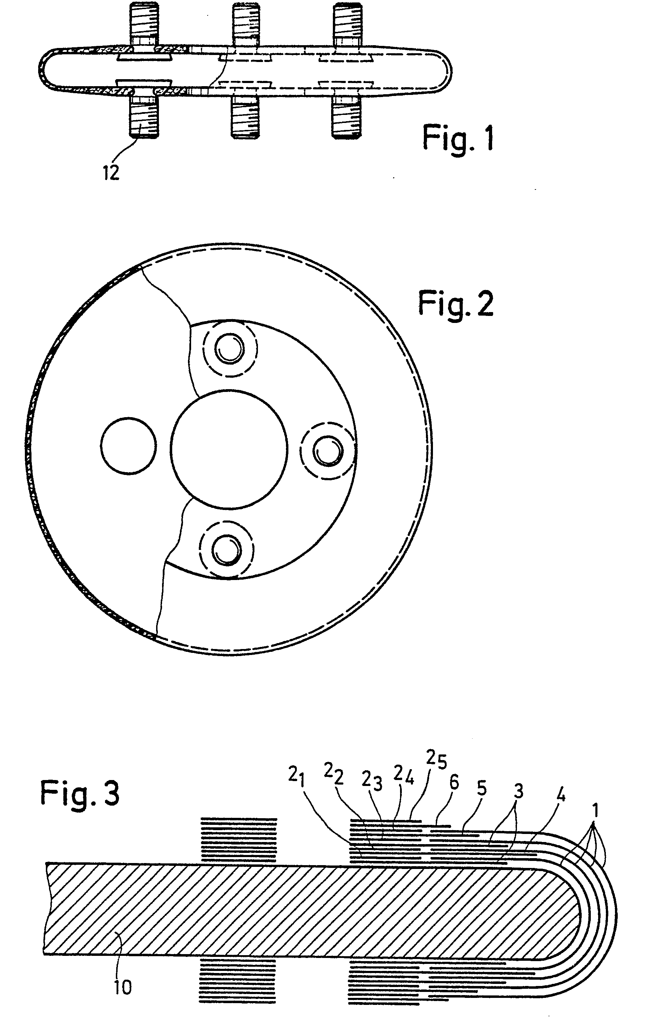

Die Fig. 1 und 2 zeigen das fertiggestellte Kupplungselement mit den integrierten Anschlusselementen 12. Der verfahrensmässig vorgesehene
Aufbau zur Herstellung des gezeigten Kupplungselementes ist im wesentlichen in den Fig. 3
bis 6 dargestellt. Als erster Fertigungsschritt ist die Erstellung eines Lagenkernes 10 aus niedrigschmelzendem Metall anzusehen, der in einem
speziellen, jedoch einfachen Giesswerkzeug gefertigt wird. Die Metall-Legierung wird gemäss der
Forderung ausgesucht, die bestimmt ist, dass die
Verflüssigungstemperatur der Legierung unterhalb der Schädigungstemperatur des ausgehärteten Faserverbundwerkstoffes liegt. Ein solcher
Werkstoff sind beispielsweise Cerro-Legierungen.

Statt aus der vorgenannten Metall-Legierung
kann der Kern auch aus einem eutektischen Salz
oder einem auswaschbaren Kunststoff – wie beispielsweise Polyviol – bestehen. Die Anschlusselemente für die Übertragung des Drehmomentes
werden bereits bei diesem Giessvorgang im Kern
fest positioniert.

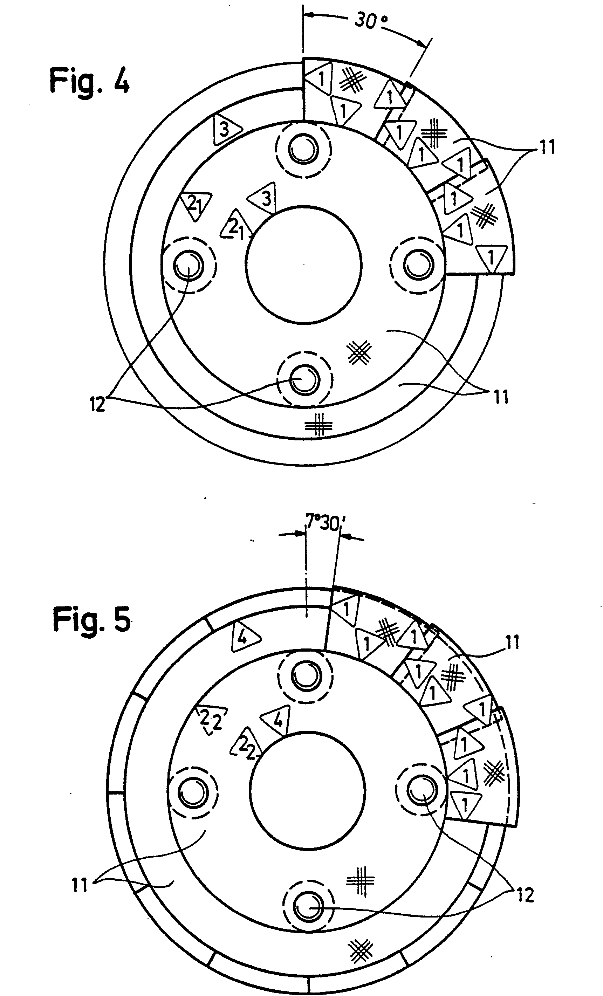

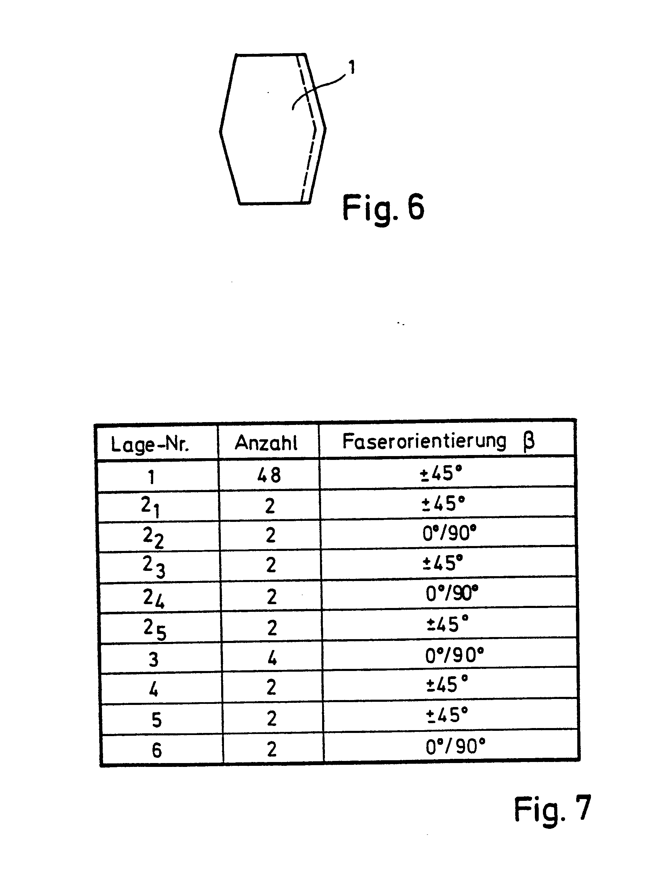

Neben dem Giessvorgang werden nun aus Faserverbundwerkstoff sog. Prepregabschnitte entweder mit einer Schablone geschnitten oder mittels einer Stanzform ausgestanzt. Diese Zuschnitte 11 werden nun auf den Lagerkern 10 in bestimmter Reihe und Folge gelegt und zueinander
überlappt. Die Fig. 4 und 5 zeigen, dass der Beginn der Zuschnittauflage – beginnend von der
vertikalen Achslinie – um bestimmte Winkelbeträge zueinander versetzt ist. In Fig. 5 beginnt also
die Zuschnittauflage 1, 7°30' von der senkrechten
Achse versetzt, die nächste Lage wäre beispielsweise 15°, wiederum die nächste 22°30' usf. Jede
einzelne Lage wird auf Kern 10 mit Zuschnitten 11
laminiert. Die Fig. 3 zeigt nun die Reihenfolge der
Laminierungsvorgänge sowie die Lagenanordnung. Die in der Fig. 7 für das beschriebene Ausführungsbeispiel gegebene Lagentabelle nebst
der entsprechenden Faserorientierung der einzelnen Lagenzuschnitte erübrigt eine detaillierte Beschreibung hierüber. Zum besseren Verständnis
sind in Fig. 3 die integrierten Anschlusselemente
12 nicht eingezeichnet.

Das so geschichtete Laminat wird nun in einem
speziellen Werkzeug verpresst und ausgehärtet.
Hierbei ist die Härtetemperatur geringer als die
Verflüssigungs- bzw. Zerfallstemperatur des Gesamtkernes zu halten. Nach vollzogener Härtung
wird das Kupplungselement ausgeformt und in
einem weiteren Arbeitsgang das Metall des Kernes ausgeschmolzen, wobei hier die Schmelztemperatur unterhalb der Schädigungstemperatur
des verwendeten ausgehärteten Faserverbundwerkstoffes liegen muss. Wie schon erwähnt, kann
der Kern auch aus einem eutektischen Salz oder
einem auswaschbaren Kunststoff bestehen.

Nach der Entformung liegt bereits das fertige,
sofort verwendungsfähige Kupplungselement vor,
es ist also keinerlei Nachbearbeitung mehr erforderlich. Dieses so erzeugte Element weist eine
Reihe beachtlicher Vorteile gegenüber den Kupplungselementen des Standes der Technik auf. Als
wesentlich ist anzusehen, dass sowohl das Gewicht, die Korrosionsbeständigkeit als auch die
Wartungsfreiheit ganz erheblich verbessert worden ist, ohne dass die geforderten mechanischen
Eigenschaften auch nur die geringsten Einbussen
erlitten haben. Als weiterhin wesentlicher Vorteil
ist zu nennen, dass dieses Kupplungselement den Ausgleich von Winkel- und Axialversatz mit ihm verbundener Torsionswellen erlaubt. Schliesslich ist noch auf die Reduzierung von Nahtstellen am Element gegenüber herkömmlicher Kupplungen hinzuweisen, wodurch sich während der Herstellung eine vereinfachte Gütesicherung erreichen lässt.

**Patentansprüche**

1. Verfahren zur Herstellung eines Kupplungselementes aus Faserverbundwerkstoff mit integrierten Anschlusselementen, dadurch gekennzeichnet,

a) dass ein Kern aus zerstörbarem Material gefertigt und mit den Anschlusselementen versehen wird,

b) dass dann in an sich bekannter Weise einzelne Lagen aus Prepregzuschnitten unterschiedlicher Abmessungen und mit den Anforderungen entsprechender Faserorientierung auf dem Kern angeordnet und der Lagenaufbau unter Aushärtung des Kunstharzes verpresst wird, und

c) dass schliesslich der Kern aus dem fertigen Kupplungselement entfernt wird.

2. Verfahren nach Anspruch 1, dadurch gekennzeichnet, dass der Kern (10) aus einem niedrigschmelzenden Metall, einem eutektischen Salz oder einem auswaschbaren Kunststoff gefertigt wird.

3. Verfahren nach den Ansprüchen 1 und 2, dadurch gekennzeichnet, dass die Härtetemperatur des Kunstharzes geringer als die Verflüssigungstemperatur bzw. Verfallstemperatur des Kerns (10) gewählt wird.

**Claims**

1. Method of producing a clutch element from fibre composite material having integrated connection elements, characterised

a) in that a core is produced from destructible material and is provided with the connection elements,

b) in that then in known "per se" manner individual layers of pre-impregnated cutout pieces of different dimensions and having a fibre orientation corresponding to the requirements are arranged on the core and the layer structure is pressed while the synthetic resin is hardening, and

c) in that finally the core is removed from the finished clutch element.

2. Method according to claim 1, characterised in that the core (10) is made of a low-melting metal, a eutectic salt or a plastics material which can be washed out.

3. Method according to claims 1 and 2, characterised in that the hardening temperature of the synthetic resin is selected so as to be lower than the liquefying temperature or decay temperature respectively of the core (10).

**Revendications**

1. Procédé pour la fabrication d'un élément d'accouplement à base de matériau composite fibreux à éléments de raccordement intégrés, caractérisé en ce que

a) on fabrique un noyau en matériau destructible et on le munit des éléments de raccordement,

b) on dispose ensuite sur le noyau, d'une façon connue en soi, des couches individuelles de pièces préimprégnées, de diverses dimensions et à orientation des fibres conforme aux exigences, et on comprime l'ensemble des couches avec durcissement de la résine synthétique, et

c) on élimine enfin le noyau hors de l'élément d'accouplement fini.

2. Procédé selon la revendication 1, caractérisé en ce que l'on fabrique le noyau (10) à partir d'un métal à bas point de fusion, d'un sel eutectique ou d'une matière plastique éliminable par lavage.

3. Procédé selon les revendications 1 et 2, caractérisé en ce que la température choisie de durcissement de la résine synthétique est inférieure à la température de liquéfaction ou à la température de décomposition du noyau (10).

**Fig. 1**

12

**Fig. 2**

**Fig. 3**

$2_1$ $2_2$ $2_3$ $2_4$ $2_5$ 6 5 3 4 1

10

**Fig. 4**

30°

11

12

11

**Fig. 5**

7°30'

11

11

12

## Fig. 6

| Lage-Nr. | Anzahl | Faserorientierung $\beta$ |
|:---:|:---:|:---:|
| 1 | 48 | $\pm 45°$ |
| $2_1$ | 2 | $\pm 45°$ |
| $2_2$ | 2 | $0°/90°$ |
| $2_3$ | 2 | $\pm 45°$ |
| $2_4$ | 2 | $0°/90°$ |
| $2_5$ | 2 | $\pm 45°$ |
| 3 | 4 | $0°/90°$ |
| 4 | 2 | $\pm 45°$ |
| 5 | 2 | $\pm 45°$ |
| 6 | 2 | $0°/90°$ |

## Fig. 7